# EUROPÄISCHE PATENTANMELDUNG

(11) **EP 3 369 684 A1**
(43) Veröffentlichungstag der Anmeldung: **05.09.2018**
(21) Anmeldenummer: 17000343.8
(22) Anmeldetag: 03.03.2017
(51) Int. Cl.: B65G 47/57

(54) **VERFAHREN UND VORRICHTUNG ZUM KOMMISSIONIEREN EINES ARTIKELS**

(71) Anmelder: Swisslog Evomatic GMBH, 4621 Sipbachzell (AT)
(72) Erfinder: Garstenauer, Michael, 4040 Linz (AT); Katzinger, Martin, 4664 Laarkirchen (AT)
(74) Vertreter: Tillmann, Axel

(57) **Zusammenfassung**

Bei einer Vorrichtung zum Kommissionieren von einem Artikel in und/oder auf einem Transportmittel (1.1, 1.2) umfassend eine Zuführeinrichtung (4), eine Hubeinrichtung (7) und eine Weitertransporteinrichtung (6), wobei die Hubeinrichtung (7) einen Träger (3) aufweist und wobei die Weitertransporteinrichtung (6) einen Extraktor (2) aufweist, soll der Träger (3) einen Segmenttisch (11) umfassen. Die Segmente des Segmenttisches (11) sind an einem umlaufenden Band (8) angeordnet. Der Extraktor (2) ist in den Träger (3) unterhalb des Segmenttisches (11) verfahrbar.

## Beschreibung

Die Erfindung betrifft eine Vorrichtung zum Kommissionieren von einem Artikel gemäss dem Oberbegriff von Anspruch 1 sowie ein Verfahren gemäss dem Oberbegriff von Anspruch 10.

### Stand der Technik

Kommissionieranlagen sind heute in vielfältigen Formen und Ausführungen bekannt. Sie dienen im Wesentlichen dazu in Logistikzentren die entsprechenden Artikeln je nach den Anforderungen zu verteilen. Dabei soll unter dem Begriff Artikel alles verstanden werden, was zu einer Kommissionierung bereitstehen kann. Dazu gehören vor allem natürlich Waren, aber auch beliebige Gebrauchs- und/oder Verbrauchsgegenstände.

In der Regel gelangen eine Vielzahl von gleichartigen Artikeln in oder auf einem Transportmittel in eine derartige Kommissionieranlage und müssen in dieser Kommissionieranlage aufgeteilt werden. Unter Transportmittel wird alles verstanden, was zum Transport dieser Artikel dienen kann. Hierzu zählen natürlich entsprechende Behältnisse, Container, Kartons, aber auch Paletten. Das Transportmittel kann einen oder mehrere Artikel transportieren.

In der Kommissionieranlage ist es oft notwendig, das Transportmittel von einem Förderer zu einem anderen zu verbringen. Geschieht dies auf gleicher Ebene, so werden die Transportmittel durch entsprechende Stosseinrichtungen von einem Förderer zum anderen geschoben bzw. gedrückt. Dies ist beispielsweise in der GB 2 048 208 A gezeigt. Vor allem aber auch aus raumtechnischen Gründen wird heute oft gefordert, dass die Zufuhr der Transportmittel auf einer anderen Ebene erfolgt, als die Abfuhr. Meist befindet sich die Zufuhr in einer Ebene unter der Ebene der Abfuhr. Dies muss aber nicht sein.

Diese unterschiedlichen Ebenen von Zu- und Abfuhr von Transportmitteln werden beispielsweise in der DE 20 2010 005 244 U1 gezeigt. Dort ist auch das heute vermehrt übliche "Ware-zum-Mann"-Kommissioniersystem angedeutet. Das Transportmittel kommt in einer tieferen Ebene an und wird dann in eine höhere Ebene angehoben, damit es dem Kommissionierer direkt zur Verfügung steht. Dieses Anheben hier geschieht durch eine Hubeinrichtung, was allerdings nur sequentiell geschehen kann, so dass viele Stillstandszeiten zu erwarten sind.

Bekannt sind auch Hubgabeln, wie beispielsweise in der EP 2 050 695 A1 gezeigt. Diese Hubgabeln greifen zwischen die Rollen eines Rollenförderers, mit dem das Transportmittel zugeführt wird. Damit aber das Transportmittel auf der anderen Ebene ordnungsgemäß abgelegt wird, bedarf es eines erheblichen konstruktiven Aufwandes für die Bewegung dieser Hubgabel. Ferner ergeben sich durch das Kämmen der Hubgabel zwischen den Rollenförderern erhebliche Gefahrenstellen für den Bediener am jeweiligen Übergang zwischen den Zinken.

Ein Verfahren und eine Vorrichtung der o.g. Art sind aus der EP 2 753 558 B1 bekannt. Dort werden die Transportmittel von der Zuführeinrichtung auf Zinken eines Trägers verbracht, angehoben, in Schräglage von einem Extraktor übernommen und zu einer Weitertransporteinrichtung gebracht. Auch hier ergibt sich durch den "kämmenden" Übergang zwischen Hebemechanismus und Extraktormechanismus eine Vielzahl potentieller Gefahrenstellen für den Bediener am jeweiligen Übergang zwischen den Zinken. Der "kämmende" Übergang führt auch zu einer, in Transportrichtung durch entsprechend breite Ausnehmungen unterbrochenen Aufnahmefläche für die transportierten Behälter, die Einschränkungen in der Art und Qualität der transportierten Behälter mit sich bringt. Der Übergang am unteren Haltepunkt erfolgt bei den dargestellten Lösungen durch Aufschieben auf eine schiefe Ebene, was bei unterschiedlichen Materialien, Qualitäten und Gewichten des transportierten Behälters zu Störungen führen kann.

### Aufgabe

Aufgabe der vorliegenden Erfindung ist es, eine zuverlässigere Lösung der Übergabe der Transportmittel allgemein und insbesondere durch Vermeidung des "kämmenden" Übergangs zwischen Hebe- und Extraktormechanismus zu realisieren sowie die Betriebssicherheit auch bei transportierten Behältern von eingeschränkter Qualität, variablem Gewicht und unterschiedlichen Materialien zu sichern.

### Lösung der Aufgabe

Zur Lösung der Aufgabe führen die kennzeichnenden Merkmale von Anspruch 1 sowie die kennzeichnenden Merkmale von Anspruch 10.

Somit findet kein kämmender Eingriff mehr statt, sondern zur Übernahme des Transportmittels von der Zufuhreinrichtung und zur Weitergabe an die Weitertransporteinrichtung werden bewegliche Teile des Trägers verwendet, wobei hierfür viele Möglichkeiten denkbar sind. Allein wesentlich ist eine Auflage für das Transportmittel, die beispielweise auch seitlich weggeschwenkt oder weggezogen werden könnte.

Das Transportmittel wird im Wesentlichen vertikal mittels des Trägers von einer Zuführeinrichtung zu der Weitertransporteinrichtung verlegt und zwar bevorzugt in einem Winkel von 60 bis 90° und besonders vorteilhaft in einem Winkel von 70° bis 80°.

Die Vorrichtung zum Kommissionieren von einem Artikel in und/oder auf einem Transportmittel umfasst die Zuführeinrichtung, eine Hubeinrichtung und die Weitertransporteinrichtung, wobei die Hubeinrichtung einen Träger aufweist und die Weitertransporteinrichtung einen Extraktor aufweist und wobei der Träger einen Segmenttisch umfasst.

Der Segmenttisch besteht aus Segmenten, welche an einem umlaufenden Band angeordnet sind, welches geeignet ist, die Segmente umlaufend zu bewegen, wenn auch das Band angetrieben wird. Vorliegend sind zwei sich gegenüberliegend und beabstandete Bänder vorgesehen, an denen die Segmente des Segmenttisches angeordnet sind. Es können auch mehr als zwei Bänder vorgesehen sein, es muss jedoch gewährleitet sein, dass der Extraktor, wie weiter unten noch beschrieben, unterhalb des Segmenttisches gelangen kann und der Träger, nachdem das Transportmittel an den Extraktor übergeben wurde, in seiner Bewegung an der Hubeinrichtung in eine andere Ebene frei ist, bevorzugt in die erste Ebene zu Aufnahme eines weiteren Transportmittels.

Die Bänder umlaufen Umlenkrollen sowie eine Antriebsrolle, der wiederum ein nicht näher gezeigter Umlaufantrieb zugeordnet ist. Die Antriebsrolle steht mit den Bändern im Reibschluss und/oder Eingriff, je nachdem wie sowohl die Antriebsrolle als auch die Bänder ausgebildet sind. So können grundsätzlich Zahnriemen, Rollenketten, Flyerketten oder dergleichen für die Bänder verwendet werden. Die Antriebsrolle kann durch andere Elemente (je nach verwendetem Zugelement und verwendeter Antriebstechnik) ersetzt werden. Wichtig ist, dass die Bänder und die Antriebsrolle in irgendeiner Art und Weise miteinander in Wirkverbindung bringbar sind.

Der Extraktor ist in den Träger bzw. unterhalb des Segmenttisches verfahrbar. Der Extraktor ist hierzu an einer Gleitschiene angeordnet und über diese in den Träger bzw. unterhalb des Segmenttisches bewegbar. Der Extraktor weist eine Halterung auf, wobei die Halterung zwischen der Gleitschiene und einem Förderer des Extraktors angeordnet ist.

Dadurch wird vorteilhaft erreicht, dass ein einfacher und reibungsloser und automatisierter Ablauf in den Übergabepunkten stattfinden kann. Durch das Einfahren des Extraktors in den Träger bzw. unterhalb des Segmenttisches und den modulförmigen Aufbau des Segmenttisches verringern sich die Konfliktpunkte im Übergabehandling. Insbesondere wird das Eigengewicht des Transportmittels optimal mit ausgenutzt.

Der Förderer des Extraktors kann vorliegend als ein Endlosband beispielsweise eines Gurtförderers ausgebildet sein. Denkbar ist es jedoch auch, den Förderer als mehrspurigen Zahnriemen, Rundriemen, Kettenförderer oder als Rollenförderer oder dergleichen auszubilden. Diese Möglichkeiten sollen von der vorliegenden Erfindung umfasst sein.

Dem Träger ist ein Antrieb, insbesondere ein Schrittmotor, Servomotor, Gleichstrommoter oder dergleichen, zum Bewegen zugeordnet, wobei der Träger durch den Antrieb entlang der Hubeinrichtung bewegbar ist. Die Hubeinrichtung kann dabei schräg zu einer Transporteinrichtung angeordnet sein, womit auch der Träger mit dem Segmenttisch eine leicht gekippte Position einnimmt. Die Transporteinrichtung weist hierbei bevorzugt ein weiteres Endlosband beispielsweise eines Gurtförderers auf. Denkbar ist es jedoch auch, die Transporteinrichtung als mehrspurigen Zahnriemen, Rundriemen, Kettenförderer oder als Rollenförderer oder dergleichen auszubilden

Bei der Übergabe des Transportmittels von der Transporteinrichtung auf den Segmenttisch kommt es zu einer leichten Fallbewegung des Transportmittels, die durch die gleichgerichtete Bewegung der Segmente des Segmenttisches mit der Transporteinrichtung kontrolliert erfolgt. Der Segmenttisch weist als Endpunkt der Aufnahme des Transportmittels einen Anschlag auf.

Der Extraktor weist ebenfalls eine geneigte Position zu der Transporteinrichtung auf. Die Neigung des Extraktors ist der Neigung des Segmenttisches und des Trägers angepasst, welche sich durch die Neigung der Hubeinrichtung ergibt. Der Segmenttisch ist vorliegend im Wesentlichen rechtwinklig zu der Hubeinrichtung angeordnet. Es ist auch denkbar, dass die Hubeinrichtung im Wesentlichen rechtwinklig zu der Transporteinrichtung angeordnet ist und der Segmenttisch in einem bestimmten, über 100° liegenden Winkel angeordnet ist, womit beispielsweise die kontrollierte Fallbewegung des Transportmittels auf den Segmenttisch ebenfalls erreichbar wäre.

Die Zuführeinrichtung und die Weitertransporteinrichtung können jeweils unterschiedliche Fördererarten umfassen. So können Gliederband-, Gurt-, Rollen-, Zahnriemen-, Kettenförderer oder dergleichen vorgesehen sein. Alternativ sind auch Transferelemente denkbar und sollen von der vorliegenden Erfindung umfasst sein.

Ein erfindungsgemässes Verfahren zum Kommissionieren von einem Artikel in und/oder auf einem Transportmittel beinhaltet folgende Schritte:
- ein Segmenttisch des Trägers mit einem umlaufenden Band wird in eine Aufnahmeposition gebracht;
- das erste Transportmittel wird auf den Segmenttisch transportiert;
- der Träger mit dem ersten Transportmittel wird in eine Abgabeposition verfahren;
- in der Abgabeposition wird ein Förderer des Extraktors in den Umfang des Trägers verfahren, wobei der Segmenttisch und damit das erste Transportmittel dabei untergriffen wird;
- das erste Transportmittel kommt auf dem Förderer zum Aufliegen und wird von dem Extraktor und dem Förderer zur Weitertransporteinrichtung verfahren;
- anschließend oder gleichzeitig wird der Träger wieder in die Aufnahmeposition zur Aufnahme eines weiteren Transportmittels gebracht.

Der Förderer und das umlaufende Band rotieren dabei bevorzugt in die gleiche Richtung.

Nach dem Entladen wird der leere Träger wieder in eine erste Ebene in die Übernahmeposition eines neuen Transportmittels nahe der Zufuhreinrichtung bewegt, wobei diese Übernahme ebenfalls durch eine weitere Bewegung der Bänder mit den Segmenten des Segmenttisches verbessert werden kann, indem die Segmente aktiv in dieser Übergabeposition die Übernahme des Transportmittel unterstützen. Sie zieht das Transportmittel auf ihre Oberfläche.

Das Verfahren soll kurz nochmals in den einzelnen Schritten beschrieben werden:
Schritt 1:
   Ein Transportmittel wird an einer oberen Übergabeposition bzw. der Übergabeposition in einer weiteren Ebene auf einem zuführenden Träger vorpositioniert.
Schritt 2:
   Ein Extraktor als Teil der Weitertransporteinrichtung wird unterhalb des Segmenttisches in den Träger und des zur Übernahme bereitstehenden vorherigen Transportmittels positioniert und kann nun dieses Transportmittel aufnehmen.
Schritt 3:
   Nach Abschluss der Bewegung des Extraktors können die umlaufenden Bänder und die Segmente unterhalb des Transportmittels wegbewegt werden.
Schritt 4:
   Nach ausreichender Bewegung des Trägers wird dieser Träger in der unteren, ersten Übergabeposition positioniert, um das neue Transportmittel aufzunehmen.
Schritt 5:
   Das zu transportierende Transportmittel wird durch eine synchronisierte Bewegung zwischen Transporteinrichtung und den umlaufenden Bändern mit den Segmenten auf den Träger bzw. die Segmente übernommen.
Schritt 6:
   Nach Abschluss des Pickvorgangs wird das erste Transportmittel durch den Extraktor von der Pickposition nach hinten weggefördert und gibt damit den Weg für das nachfolgende Transportmittel frei.
Schritt 7:
   Die Hubeinrichtung bzw. der Träger mit dem neuen Transportmittel wird in die Pickposition nach oben positioniert. Gleichzeitig wird der Vorgängerbehälter an die angrenzende Fördertechnik übergeben und ein weiterer Folgebehälter in die untere Übergabeposition gebracht.

Um die geforderten Wechselzeiten zu erreichen erscheint es zweckmässig, von einer rein sequentiellen Ausführung der einzelnen Schritte zu einer zumindest teilweise Parallel-/Synchronausführung zumindest der beiden letzten Schritte überzugehen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematische Darstellung eines Teils einer erfindungsgemässen Kommissionieranlage während eines ersten Verfahrensschritts zum Kommissionieren von einem Artikel;
**Figuren 2 - 8** jeweils schematische Darstellungen der weiteren Verfahrensschritte des erfindungsgemässen Verfahrens zum Kommissionieren von einem Artikel; und
**Figur 9** eine Draufsicht auf die Kommissionieranlage in Figur 1 ohne Transportmittel.

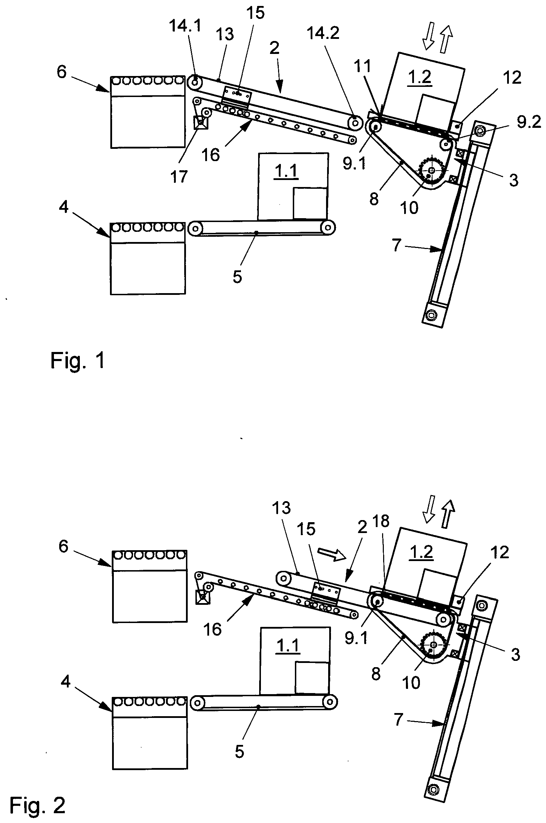

Gemäss Figur 1 wird ein Ausschnitt einer Kommissionieranlage mit einer Zufuhreinrichtung 4, einem Träger 3, einem Extraktor 2 sowie einer Weitertransporteinrichtung 6 gezeigt. Weiterhin sind zwei Transportmittel 1.1 und 1.2 zum Transportieren von einem oder mehreren nicht näher gezeigten Artikeln angedeutet. Dabei befindet sich das Transportmittel 1.1 in einer Warteposition, während das Transportmittel 1.2 in einem weiteren Stadium des erfindungsgemässen Verfahrens zur Übernahme durch den Extraktor 2 auf dem Träger 3 bereit steht.

Das Transportmittel 1.1 wurde auf der als beispielsweise Rollenförderer ausgebildeten Zufuhreinrichtung 4 in einer ersten, hier unteren, Ebene herangeführt und bereits auf eine Transporteinrichtung 5 übergeben. Unten bedeutet in diesem Zusammenhang der dem Transportmittel 1.1 abgewandte Bereich der Transporteinrichtung 5. Das Transportmittel 1.1 soll auf die beispielsweise als weiterer Rollenförderer ausgebildete Weitertransporteinrichtung 6 in einer weiteren Ebene verbracht werden, was über verschiedene, weiter unten beschriebene und in den Figuren 2 bis 8 dargestellte Verfahrensschritte geschieht.

Der Träger 3, auf dem das Transportmittel 1.2 bereitsteht, befindet sich an einer Hubeinrichtung 7, mit der der Träger 3 auf beliebige Art und Weise zwischen der Transporteinrichtung 5 und dem Extraktor 2 hin und her bewegt werden kann. Dabei weist der Träger 3 zwei sich gegenüberliegende Bänder 8 auf, wovon in den Figuren 1 bis 8 nur das vordere Band sichtbar ist. Diese Bänder umlaufen Umlenkrollen 9.1 und 9.2 sowie eine Antriebsrolle 10, der wiederum ein nicht näher gezeigter Antrieb zugeordnet ist. Die Antriebsrolle 10 steht mit den Bändern 8 im Reibschluss und/oder Eingriff, je nachdem wie sowohl die Antriebsrolle 10 als auch die Bänder 8 ausgebildet sind. So können grundsätzlich Zahnriemen, Rollenketten, Flyerketten oder dergleichen für die Bänder 8 verwendet werden. Die Antriebsrolle 10 kann durch andere Elemente (je nach verwendetem Zugelement und verwendeter Antriebstechnik) ersetzt werden. Wichtig ist, dass die Bänder 8 und die Antriebsrolle 10 in irgendeiner Art und Weise miteinander in Wirkverbindung bringbar sind..

Die beiden umlaufenden Bänder 8 sind Teil eines Segmenttisches 11, welcher aus Segmenten 18 aufgebaut ist, die wiederum an den Bändern 8 befestigt sind, so dass sie mit diesen um die Umlenkrollen 9.1 und 9.2 sowie die Antriebsrolle 10 umlaufend bewegbar sind.

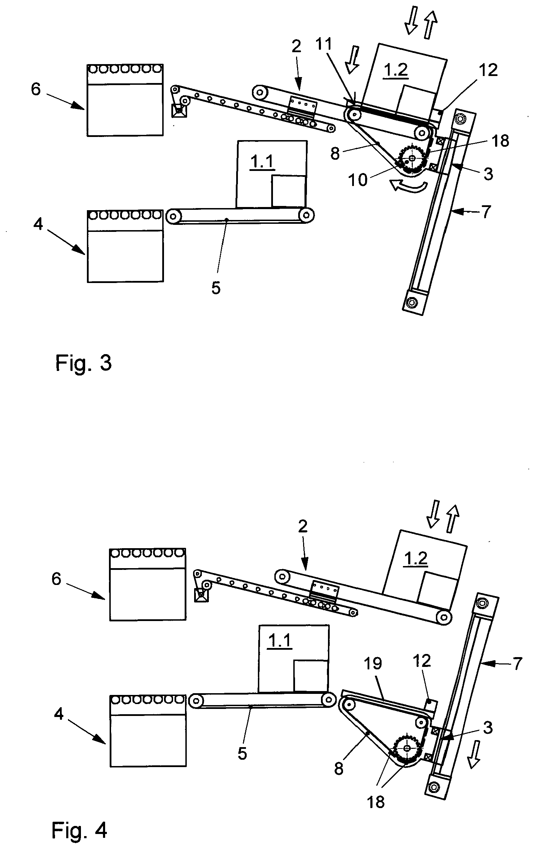

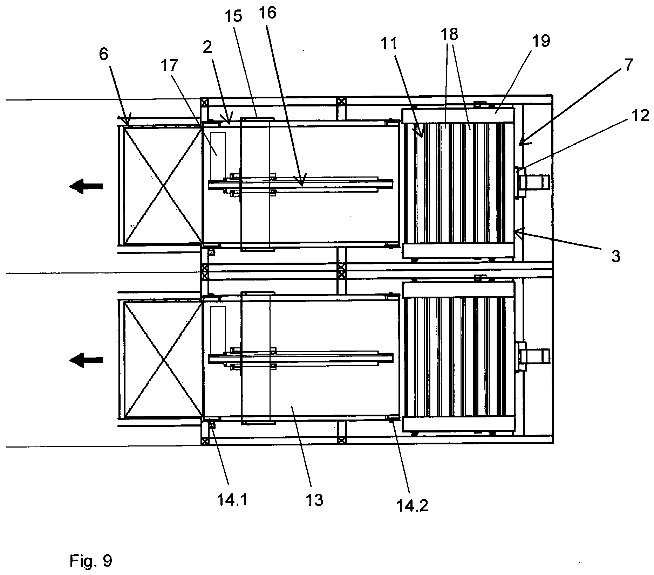

In Randbereichen der Bänder 8 weist der Träger 3 vorliegend zwei Tragarme 19 auf (siehe beispielsweise Figur 4 und 9), welche die Bänder 8 jeweils so überlagern, dass jeweils ein Band 8 unter einem Tragarmen 19 verläuft. Damit verlaufen auch Randbereiche der Segmente 18 des Segmenttisches 11 unterhalb der Tragarme 19.

Das Transportmittel 1.2 liegt in Gebrauchslage auf den Segmenten 18 des Segmenttisches 11 auf. Die Tragarme 19 sowie ein Anschlag 12 im hinteren Bereich des Trägers 3, d.h. der der Hubeinrichtung 7 zugewandte Bereich des Trägers 11 dienen der Begrenzung und sollen ein Abrutschen des Transportmittels 1.2 von dem Segmenttisch 11 bzw. den Segmenten 18 verhindern.

Die Tragarme 19 und die Bänder 8 des Segmenttisches 11 sind derart voneinander beabstandet, dass zwischen sie ein Förderer 13 des Extraktors 2 einfahren kann.

Der Förderer 13 des Extraktor 2 besteht im Wesentlichen ebenfalls aus einem Endlosband, welches zwei beabstandete Umlenkrollen 14.1 und 14.2 umschliesst. Über Halterungen 15 ist der Extraktor 2 mit einer über einen Antrieb 17 angetriebenen Gleitschiene 16 verbunden. Der Extraktor 2 ist entlang der Gleitschiene 16 zwischen die Bänder 8 des Segmenttisches 11 und die Tragarme 19 verschiebbar. Gleichzeitig gelangt der Extraktor 2 dabei unter die Segmente 18 des Segmenttisches 11.

In Figur 2 ist dieses Verschieben des Extraktors 2 zwischen die Bänder 8 des Segmenttisches 11 bzw. zwischen die Tragarme 19 des Trägers 3 gezeigt, wobei der Extraktor 2 unterhalb des Transportmittels 1.2 gelangt.

Gemäss Figur 3 wird nun die Antriebsrolle 10 in Bewegung gesetzt und nimmt die Bänder 8 mit Segmenten 18 in Pfeilrichtung mit. Die Segmente 18 werden nun in die Wartestellung für den nächsten Aufnahmeprozess bei der Transporteinrichtung 5 gebracht. Das Transportmittel 1.2 "fällt" auf den Förderer 13 des Extraktors 2. Damit ist der Träger 3 frei in seiner Bewegung nach unten.

Der Träger 3 kann nunmehr, wie in Figur 4 gezeigt, an der Hubeinrichtung 7 entlang nach unten bewegt werden, bis er sich in etwa auf der Höhe der Transporteinrichtung 5 befindet. Jetzt wird diese Transporteinrichtung 5 in Gang gesetzt, so dass das Transportmittel 1.1 auf den Träger 3 gelangt. Die Segmente 18 des Segmenttisches 11 werden gleichzeitig in ihre in den Figuren 1 und 2 gezeigte Position unterhalb der Tragarme 19 bewegt und unterstützen auf ihrem Weg dorthin die Übergabehandlung von der Transporteinrichtung 5 auf den Träger 3 bzw. den Segmenttisch 11. Die Übergabehandlung ist abgeschlossen, wenn das Transportmittel 1.1 an dem Anschlag 12 anliegt.

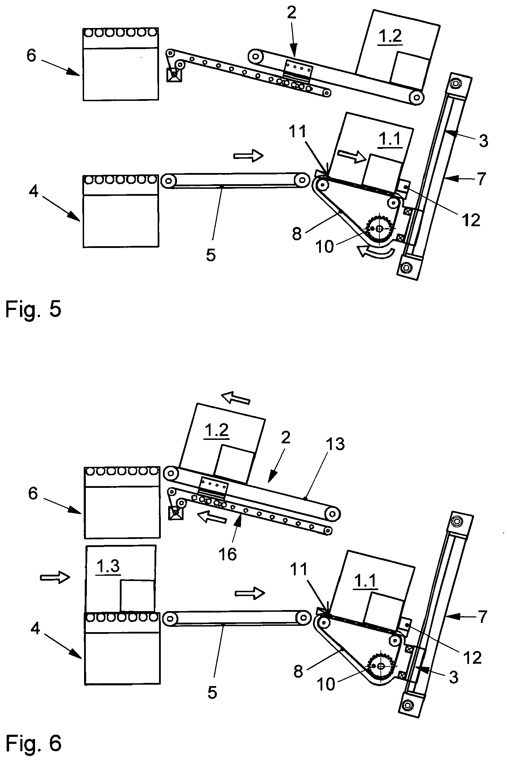

Sequentiell oder gleichzeitig wird gemäss Figur 6 der Extraktor 2 entlang der Gleitschiene 16 zu der Weitertransporteinrichtung 6 hin bewegt. Durch gleichzeitige Betätigung des Fördereres 13 wird das Transportmittel 1.2 zum Ende der Weitertransporteinrichtung 6 hin verfrachtet und gelangt schließlich auf diese Weitertransporteinrichtung 6. Von da aus kann das Transportmittel 1.2 weiter transportiert werden.

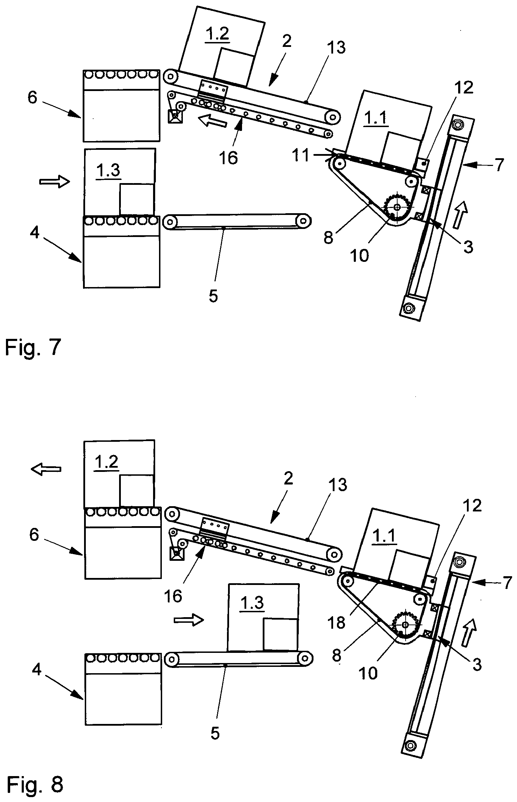

Während gemäss Figur 7 das Transportmittel 1.1 mit dem Träger 3 entlang der Hubeinrichtung 7 in Richtung Extraktor 2 hin bewegt wird, erfolgt die Zufuhr eines weiteren Transportmittels 1.3 auf dem Rollenförderer 4 in Richtung zur Transporteinrichtung 5.

Schlussendlich ist in Figur 8 gezeigt, dass sich das Transportmittel 1.2 auf der Weitertransporteinrichtung 6 zur Weiterbeförderung befindet, das Transportmittel 1.1 befindet sich kurz vor seiner Übergabeposition auf den Extraktor 2 und das Transportmittel 1.3 befindet sich in Warteposition.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen.

### Bezugszeichenliste

- 1: Transportmittel
- 2: Extraktor
- 3: Träger
- 4: Zufuhreinrichtung
- 5: Transporteinrichtung
- 6: Weitertransporteinrichtung
- 7: Hubeinrichtung
- 8: Bänder
- 9: Umlaufrolle
- 10: Antriebsrolle
- 11: Segmenttisch
- 12: Anschlag
- 13: Förderer
- 14: Umlenkrolle
- 15: Halterung
- 16: Gleitschiene
- 17: Antrieb
- 18: Segment
- 19: Tragarm

## Patentansprüche

1. Vorrichtung zum Kommissionieren von einem Artikel in und/oder auf einem Transportmittel (1.1 - 1.3) umfassend eine Zuführeinrichtung (4), eine Hubeinrichtung (7) und eine Weitertransporteinrichtung (6), wobei die Hubeinrichtung (7) einen Träger (3) aufweist und wobei die Weitertransporteinrichtung (6) einen Extraktor (2) aufweist,
**dadurch gekennzeichnet,**
**dass** der Träger (3) einen Segmenttisch (11) umfasst.

2. Vorrichtung nach Anspruch 1, **dadurch gekennzeichnet, dass** der Segmenttisch (11) aus Segmenten (18) besteht.

3. Vorrichtung nach Anspruch 2, **dadurch gekennzeichnet, dass** die Segmente (18) an einem umlaufenden Band (8) angeordnet ist, geeignet, die Segmente (18) umlaufend zu bewegen.

4. Vorrichtung nach einem der vorigen Ansprüche, **dadurch gekennzeichnet, dass** der Extraktor (2) in den Träger (3) bzw. unterhalb des Segmenttisches (11) verfahrbar ist.

5. Vorrichtung nach einem der vorigen Ansprüche, **dadurch gekennzeichnet, dass** der Extraktor (2) an einer Gleitschiene (16) in den Träger (3) bzw. unterhalb des Segmenttisches (11) bewegbar ist.

6. Vorrichtung nach Anspruch 5, **dadurch gekennzeichnet, dass** der Extraktor (2) eine Halterung (15) aufweist, wobei die Halterung (15) zwischen der Gleitschiene (16) und einem Förderer (13) angeordnet ist.

7. Vorrichtung nach einem der vorigen Ansprüche, **dadurch gekennzeichnet, dass** dem Träger (3) ein Antrieb zum Bewegen zugeordnet ist, wobei der Träger (3) durch den Antrieb entlang der Hubeinrichtung (7) bewegbar ist.

8. Verfahren zum Kommissionieren von einem Artikel in und/oder auf einem Transportmittel (1.1 - 1.3), wobei das Transportmittel (1.1 - 1.3) mittels eines Trägers (3) von einer Zuführeinrichtung (4) zu einer Weitertransporteinrichtung (6) im Wesentlichen vertikal verlegt wird, **dadurch gekennzeichnet, dass** ein Segmenttisch (11) des Trägers (3) mit einem umlaufenden Band (8) zur Aufnahme und Weitergabe des Transportmittel (1.1 - 1.3) verfahren wird.

9. Verfahren nach Anspruch 8, **dadurch gekennzeichnet, dass** der Segmenttisch (11) des Trägers (3) in eine Aufnahmeposition gebracht und das erste Transportmittel (1.1) auf den Segmenttisch (11) transportiert wird.

10. Verfahren nach einem der Ansprüche 8 oder 9, **dadurch gekennzeichnet, dass** der Träger (3) mit dem ersten Transportmittel (1.1) in eine Abgabeposition verfahren wird.

11. Verfahren nach einem der Ansprüche 8 bis 10, **dadurch gekennzeichnet, dass** in der Abgabeposition ein Förderer (13) des Extraktors (2) in den Umfang des Trägers (3) verfahren wird, wobei der Segmenttisch (11) und damit das erste Transportmittel (1.1) dabei untergriffen wird.

12. Verfahren nach einem der Ansprüche 8 bis 11, **dadurch gekennzeichnet, dass** das erste Transportmittel (1.1) auf dem Förderer (13) zum Aufliegen kommt und von dem Extraktor (2) und dem Förderer (13) zur Weitertransporteinrichtung (6) verfahren wird.

13. Verfahren nach einem der Ansprüche 8 bis 12, **dadurch gekennzeichnet, dass** anschließend oder gleichzeitig der Träger (3) wieder in die Aufnahmeposition zur Aufnahme eines weiteren Transportmittels (1.3) gebracht wird.

14. Verfahren nach einem der Ansprüche 8 bis 13, **dadurch gekennzeichnet, dass** der Förderer (5) und das umlaufende Band (8) in die gleiche Richtung rotieren.

15. Verfahren nach einem der Ansprüche 8 bis 14, **dadurch gekennzeichnet, dass** bei der Übergabe des Transportmittels (1.1) von dem Segmenttisch (11) auf den Extraktor (2) der Segmenttisch (11) zu der Zuführeinrichtung (4) fährt, wobei der Extraktor (2), der Segmenttisch (11) und das Endlosband (13) synchron bewegt werden.
